# EUROPEAN PATENT SPECIFICATION

(11) **EP 1 978 273 B1**
(45) Date of publication and mention of the grant of the patent: **26.06.2013**
(21) Application number: 08152806.9
(22) Date of filing: 14.03.2008
(51) Int. Cl.: F16D 66/02

(54) **Wear indicator**
Verschleisssensor
Capteur d'usure

(30) Priority: 16.03.2007 IT TO20070040 U
(43) Date of publication of application: 08.10.2008
(73) Proprietor: I.C.P. S.r.l., CASTELNUOVO DON BOSCO (IT)
(72) Inventor: Razzano, Tancredi, 14020 Piova'Massaia (IT)
(74) Representative: Bergadano, Mirko

(56) References cited:
- FR-A- 2 266 056
- GB-A- 1 233 495
- JP-A- 11 173 353

## Description

The present invention relates to a wear indicator for a braking member, in particular a brake pad for vehicles, to which the following description will explicitly refer without any loss of its generality.

As is known, a brake pad for vehicles comprises a support plate, a block of friction material carried by the support plate, and a wear indicator to detect a wear limit condition of the block of friction material and order the emission of an acoustic or optical signal informing the driver of the need to replace the friction material.

Generally, the wear sensor comprises insulated electrical wiring, a terminal section of the free extremity of which is housed in a blind hole obtained in the block of friction material, and is retained within said hole, for example, by gluing.

Following its insertion in the block of friction material or during its operational life, for example because of stresses transmitted from outside, the terminal section of the electrical wiring may end up in a functional position in which it is partially extracted and thus different from the normal fully inserted position. It follows that, when the terminal section is arranged in said partially extracted position, the sensor does not send signals or sends them after a delay in relation to the moment in which the friction material reaches its wear limit condition compromising, in this way, the proper functioning of the braking members but, above all, putting the safety of the persons on board the vehicle at risk.

JP-A-11-173353 discloses a wear sensor coupled to a friction material supporting plate by elastic retaining means, cf. preamble of claim 1.

The aim of the present invention is to provide a wear sensor with constructional characteristics that are able to overcome the disadvantage described above in a simple and cost-effective manner.

According to the present innovation, a wear sensor is realized for a braking member of a vehicle, as claimed in Claim 1.

The invention will now be described with reference to the attached drawings, illustrating some examples of non-limiting embodiments, in which:
Figure 1 illustrates a preferred embodiment of the wear sensor according to the dictates of the present innovation arranged in a position in which it is disconnected from a braking member;
Figure 2 illustrates a cross-section, on a greatly magnified scale, along the line II-II of Figure 1;
Figure 3 illustrates a first variant of a detail of Figure 1;
Figure 4 illustrates a second variant of a detail of Figure 1, not in accordance with the present invention;
Figure 5 illustrates a third variant of a detail of Figure 1, not in accordance with the present invention, and
Figure 6 illustrates a fourth variant of a detail of Figure 1.

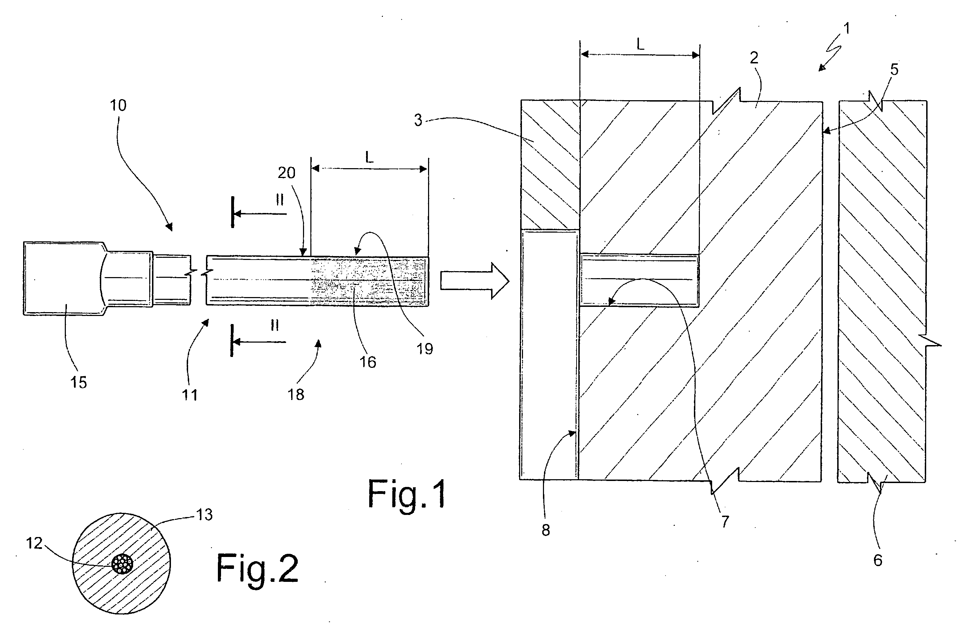

In Figure 1, number 1 indicates, as a whole, a braking member for a vehicle, for example, a brake pad. The braking member 1 comprises a block 2 of friction material, and a supporting member 3 of said block 2 of friction material.

In the particular example described, the block 2 of friction material is delimited, on one side, by a friction surface 5 suitable to cooperate frictionally with a brake disk 6, and is provided with a blind hole 7 extending for a predefined length L starting at the surface 8 opposite the surface 5 orthogonal to said surface 5.

A wear sensor 10 is joined to the braking member 1 to detect a wear limit condition of the block 2 of friction material and to emit a wear limit signal to an acoustic or light-emitting device (not illustrated). The sensor 10 comprises electrical wiring 11 in turn comprising a core 12 of conductor material and an external sheath 13 made of insulating material (Figure 2). The electrical wiring 11 has one extremity connected to an electrical connector 15 for the connection of the wiring 11 to a cable bundle of the vehicle (not illustrated), and an opposite terminal section 16 inserted inside the blind hole 7 and conveniently retained in a fixed position of reference through the interposition of gluing material. Alternatively, according to variants that are not illustrated, the terminal section 16 is retained within the blind hole 7 by elastic devices or metal brackets of a known type.

The sensor 10 further comprises a position detection or signalling device 18 that enables the visual detection from the outside of an irregular positioning, that is, a condition of insertion or operation, in which the terminal section 16 is partially or completely extracted from the blind hole 7 and is therefore in a position different from the correct fixed position of reference.

In the embodiment illustrated in Figure 1, the device 18 is defined by the lateral external surface 19 of the terminal section 16. Said surface 19 has a colouring or shade of colour different to that of the adjacent lateral external surface 20 of the electrical wiring 11. Alternatively, the lateral surface 19 has a roughness different from that of the lateral surface 20 of the wiring 11 next to the terminal portion 16. In both cases, since the length of the surface 19 measured from the free extremity of the terminal section 16 is practically equal to the length L of the blind hole 7, when the terminal section 16 is arranged in its position of reference, said surface 19 is not visible from the outside. The surface 19 becomes immediately visible however and therefore comparable with the adjacent surface 20 when the section 16 is even only partially extracted from the hole 7. In this condition the adjacent surfaces 19 and 20 are immediately visibly comparable in terms of their colour, shade and to the touch, in relation to their roughness.

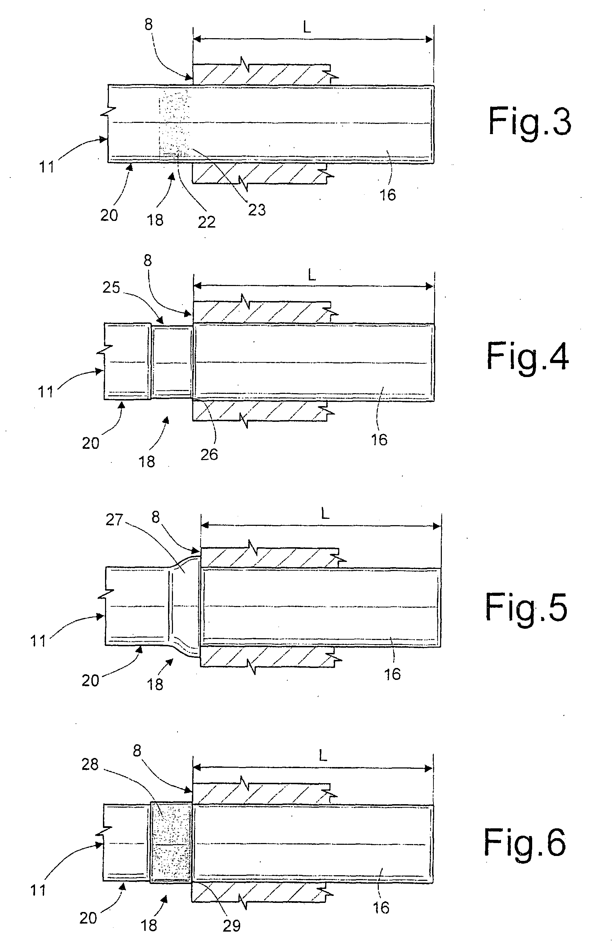

In the embodiment in Figure 3, the mark is defined by an area 22 of the lateral surface 19 of the wiring 11. Said area 22 has a colour/shade of colour that is at least different from that of the adjacent lateral surface 20 of the electrical wiring 11.

Alternatively, the area 22 has a roughness different from that of the surface 20 of the wiring 11 adjacent to it. In both cases, when the terminal section 16 is arranged in its fixed position of reference, a longitudinal edge 23 of the area 22 extends in contact with the surface 8.

With reference to the solution illustrated in Figure 4, the reference mark is defined by a recess 25, for example, a circumferential groove, obtained on the lateral surface 19 of the wiring 11. According to a variant that is not illustrated, the recess 25 is defined by a smooth area or by a dent or also by one or more notches that can be detected visibly or by touch. In any case, an axial edge 26 of the recess 25 is arranged so as to fit against the surface 8 when the section 16 is arranged in its fixed position of reference.

In the variant illustrated in Figure 5, the device 18 comprises a projecting part 27 co-pressed with the sheath 13 made of insulating material. The projecting part 27 has a frontal surface of reference that is arranged in contact with the surface 8 when the terminal section is arranged in its fixed position of reference.

In the additional variant of Figure 6, the device comprises a band 28 of flexible material pasted onto a portion of the wiring 11 starting from the terminal section 16. When the terminal section 16 is arranged in its fixed position of reference, a longitudinal edge 29 of the band 28 extends in contact with the surface 8 and is instead distanced from said surface 8 in any other partially extracted condition. In order to facilitate detection, the band 28 has a lateral surface with a colour or roughness different from that of the lateral surface of the wiring.

From the foregoing it is clear that all of the described embodiments enable immediate detection, the sensor simply observing the incorrect positioning of the terminal section of said sensor in relation to the friction surface of the friction material so that the necessary action can be taken both in the assembly stage and once fitted on the vehicle, should the section be partially extracted from the blind hole, thus avoiding abnormal conditions of operation and ensuring the necessary reliability and safety.

From the foregoing it is clear how the described wear sensor 10 can be modified and varied without departing from the scope of the invention as defined by claim 1.

In particular it is clear that the device 18 can be implemented in such a way as to have as its reference not the surface 8 of the friction material but any other fixed surface or an element of reference arranged in a position in relation to the friction surface 5 of the block 2 of friction material.

## Claims

1. Wear sensor (10) for a braking member of a vehicle comprising a block of friction material (2) suitable to cooperate frictionally with a relative metallic braking member (6), the sensor (10) comprising an electrical wiring (11), a detection portion (16) connected to said electrical wiring (11) and suitable to be joined to said block of friction material (2) in a fixed operating position of reference for the detection of a wear limit state of the block of friction material (2), and a position detection means (16;22;25;27;28) to visibly detect from the outside when said detection portion is in a position other than said fixed operating position of reference,
said electrical wiring having a lateral external surface and comprising a terminal extremity portion defining said detection portion, said position detection means (16;22;25;27;28) being carried only by said electrical wiring (11).
said position detection means comprising at least one reference mark (16;22;25) provided on said lateral external surface (20). , **characterized by** the fact that said reference mark comprises at least one area (16;22) of said lateral external surface having a colour, shade of colour or roughness different from that of. the adjacent lateral external surface of said electrical wiring.

## Patentansprüche

1. Verschleißsensor (10) für ein Bremselement eines Fahrzeugs, das einen Block (2) aus Reibmaterial enthält, das reibungstechnisch mit einem damit in Beziehung stehenden metallischen Bremselement (6) zusammenwirken kann, wobei der Sensor (10) eine elektrische Verdrahtung (11), einen Detektionsabschnitt (16), der mit der elektrischen Verdrahtung (11) verbunden ist und geeignet ist, mit dem Block (2) aus Reibmaterial in einer festen ReferenzArbeitsposition für die Detektion eines Verschleißgrenzzustands des Blocks (2) aus Reibmaterial verbunden zu werden, und ein Positionsdetektionsmittel (16; 22; 25; 27; 28), um von außen visuell zu detektieren, wenn sich der Detektionsabschnitt in einer anderen Position als der festen ReferenzArbeitsposition befindet, umfasst,
wobei die elektrische Verdrahtung eine seitliche äußere Oberfläche besitzt und einen Anschlussendabschnitt, der den Detektionsabschnitt definiert, umfasst, wobei das Positionsdetektionsmittel (16; 22; 25; 27; 28) nur von der elektrischen Verdrahtung (11) getragen wird,
wobei das Positionsdetektionsmittel wenigstens eine Referenzmarkierung (16; 28; 25) umfasst, die an der seitlichen äußeren Oberfläche (20) vorgesehen ist,
**dadurch gekennzeichnet, dass** die Referenzmarkierung wenigstens einen Bereich (16; 22) der seitlichen äußeren Oberfläche aufweist, der eine Farbe, einen Farbton oder eine Rauheit besitzt, die von jener der benachbarten seitlichen äußeren Oberfläche der elektrischen Verdrahtung verschieden sind.

## Revendications

1. Capteur d'usure (10) pour un organe de freinage d'un véhicule comprenant un bloc de matériau de friction (2) adapté pour coopérer par friction avec un organe de freinage métallique (6) relatif, le capteur (10) comprenant un câblage électrique (11), une portion de détection (16) connectée audit câblage électrique (11) et adaptée pour être jointe audit bloc de matériau de friction (2) dans une position de fonctionnement fixe de référence pour la détection d'un état de limite d'usure du bloc de matériau de friction (2), et un moyen de détection de position (16 ; 22 ; 25 ; 27 ; 28) destiné à détecter visiblement depuis l'extérieur lorsque ladite portion de détection est dans une position autre que ladite position de fonctionnement fixe de référence,
ledit câblage électrique ayant une surface externe latérale et comprenant une portion d'extrémité de borne définissant ladite portion de détection, ledit moyen de détection de position (16 ; 22 ; 25 ; 27 ; 28) n'étant porté que par ledit câblage électrique (11), ledit moyen de détection de position comprenant au moins un repère de référence (16 ; 22 ; 25) agencé sur ladite surface externe latérale (20), **caractérisé par le fait que** ledit repère de référence comprend au moins une zone (16 ; 22) de ladite surface externe latérale ayant une couleur, une nuance de couleur ou une rugosité différente de celle de la surface externe latérale adjacente dudit câblage électrique.
